# FASCICULE DE BREVET EUROPEEN

(11) **EP 2 542 797 B1**
(45) Date de publication et mention de la délivrance du brevet: **22.11.2017**
(21) Numéro de dépôt: 11712944.5
(22) Date de dépôt: 01.03.2011
(51) Int. Cl.: F16F 1/13, F16F 3/02

(54) **ELÉMENT ABSORBANT D'ÉNERGIE PERFECTIONNÉ ET BRIDE DE PRÉCONTRAINTE ASSOCIÉE**
VERBESSERTES STROMABSORPTIONSELEMENT UND VORSPANNUNGSFLANSCH DAFÜR
IMPROVED ENERGY-ABSORBING ELEMENT AND RELATED PRETENSIONING FLANGE

(30) Priorité: 01.03.2010 EP 10305209
(43) Date de publication de la demande: 09.01.2013
(73) Titulaire: Airbus Helicopters, 13725 Marignane Cedex (FR)
(72) Inventeur: DELAGE, Vincent, F-36100 Issoudun (FR); SIBOTTIER, Catherine, F-36100 Issoudun (FR); DHERMAND, Julien, F-36100 Issoudun (FR)
(74) Mandataire: GPI & Associés
(86) Numéro de dépôt international: PCT/FR2011/050424
(87) Numéro de publication internationale: WO 2011/107706

(56) Documents cités:
- DE-A1- 10 026 178
- GB-A- 497 008

## Description

### DOMAINE TECHNIQUE DE L'INVENTION

L'invention concerne un élément absorbant d'énergie perfectionné ainsi que la bride de précontrainte associée. L'invention trouve une application particulièrement avantageuse, mais non exclusive, pour la fabrication des sièges d'hélicoptère.

### ETAT DE LA TECHNIQUE

La Figure 1 montre un élément absorbant 1 d'énergie décrit dans le document EP 2113677 muni d'une portion absorbante 2, d'un premier point d'ancrage 3 et d'un deuxième point d'ancrage 4, une première et une deuxième extrémités distales 2', 2" de ladite partie absorbante 2 étant respectivement solidarisées aux premier et deuxième points d'ancrage 3, 4.

La portion absorbante 2 comporte au moins un élément filiforme 5, 6 solide se déformant élastiquement lors d'une sollicitation en traction inférieure à un seuil prédéterminé et plastiquement lors d'une sollicitation en traction supérieure audit seuil prédéterminé, ledit au moins un élément filiforme 5, 6 étant muni d'une succession de segments droits 7, 8, 9 et de segments en arc de cercle 10 de manière à avoir au moins deux segments droits successifs reliés par un segment en arc de cercle 10.

### OBJET DE L'INVENTION

L'invention a notamment pour but d'améliorer les performances de cet élément absorbant.

A cette fin, l'invention consiste à précontraindre l'élément absorbant d'énergie sur sa longueur à l'aide d'un outil adapté, puis à insérer une bride permettant de maintenir son état précontraint.

L'invention concerne donc un élément absorbant d'énergie comportant :
- une portion absorbante,
- un premier et un deuxième point d'ancrage,
- une première et une deuxième extrémités distales de ladite partie absorbante étant respectivement solidarisées aux premier et deuxième points d'ancrage,
caractérisé en ce qu'il comporte en outre :
- une bride de précontrainte installée entre la première et la deuxième extrémités distales, cette bride présentant une longueur supérieure à l'écart entre les deux extrémités distales de manière à précontraindre ledit élément absorbant.

La portion absorbante est formée par deux éléments filiformes solides aptes à se déformer élastiquement lors d'une sollicitation en traction inférieure à un seuil prédéterminé et plastiquement lors d'une sollicitation en traction supérieure audit seuil prédéterminé. Selon une réalisation, la bride est installée entre ces deux éléments filiformes.

Selon une réalisation, la bride de précontrainte est positionnée suivant un axe de symétrie de l'élément absorbant.

Selon une réalisation, l'épaisseur de la bride est fonction des efforts de compressions exercés par la portion absorbante sur la bride.

Selon une réalisation, la longueur de la bride est fonction du niveau de précontrainte exigé par la portion absorbante pour le fonctionnement souhaité.

L'invention concerne en outre une bride destinée à être utilisée avec l'élément absorbant selon l'invention caractérisé en ce qu'elle présente la forme sensiblement d'une tige allongée comportant des extrémités présentant chacune deux rebords délimitant une cuvette pour recevoir les extrémités distales de l'élément absorbant.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 (déjà décrite) : une représentation schématique d'un élément absorbant d'énergie selon l'état de la technique ;
Figure 2 : une représentation schématique d'un élément absorbant perfectionné selon l'invention ainsi qu'une vue en coupe longitudinale de la bride selon l'invention ;
Figure 3 : une représentation schématique d'un outillage selon l'invention permettant de précontraindre l'élément absorbant de la Figure 1 pour y insérer la bride selon l'invention.

Les éléments identiques conservent la même référence d'une figure à l'autre.

### DESCRIPTION D'EXEMPLES DE REALISATION DE L'INVENTION

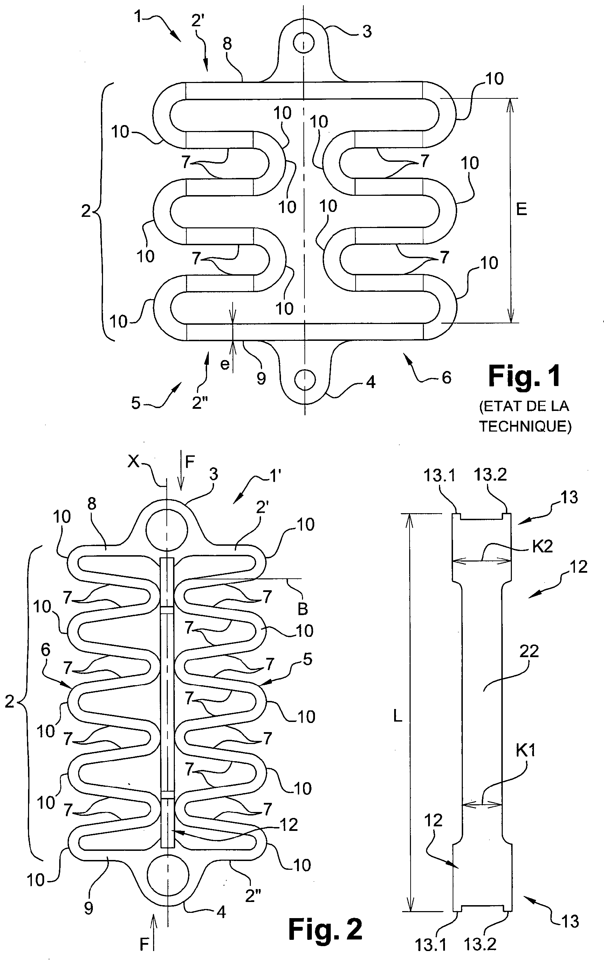

La Figure 2 montre un élément 1' absorbant d'énergie perfectionné selon l'invention particulièrement adapté à la construction de sièges d'hélicoptère.

Cet élément 1' est muni d'une portion absorbante 2, d'un premier point d'ancrage 3 et d'un deuxième point d'ancrage 4, une première et une deuxième extrémités distales 2', 2" de ladite partie absorbante 2 étant respectivement solidarisées aux premier et deuxième points d'ancrage 3, 4.

La portion absorbante 2 comporte deux éléments filiformes 5, 6 solide se déformant élastiquement lors d'une sollicitation en traction inférieure à un seuil prédéterminé et plastiquement lors d'une sollicitation en traction supérieure audit seuil prédéterminé.

Ces éléments filiformes 5, 6 sont munis d'une succession de segments droits 7, 8, 9 et de segments en arc de cercle 10 de manière à avoir au moins deux segments droits successifs reliés par un segment en arc de cercle 10.

Une bride 12 de précontrainte est installée entre la première 2' et la deuxième 2" extrémité distales correspondant respectivement aux segments droits 8 et 9 les plus éloignés l'un de l'autre de l'élément 1'. La bride 12 est également positionnée entre les deux éléments filiformes 5, 6.

De préférence, la bride 12 est positionnée au centre de l'élément absorbant d'énergie 1, c'est-à-dire qu'elle est positionnée suivant un axe de symétrie X de l'élément absorbant 1'.

Cette bride 12 présente une longueur L supérieure à l'écart E entre les deux extrémités distales 2', 2" de manière à précontraindre ledit élément absorbant 1'. Cet écart E correspond à la distance qui sépare les segments droits d'extrémité 8 et 9 lorsque l'élément 1 n'est pas précontraint.

Comme bien visible sur la vue en coupe longitudinale de la Figure 2, la bride 12 présente sensiblement la forme d'une tige allongée terminée à ses extrémités 13 par deux éléments bloquants. Ces éléments bloquants sont conçus pour garantir le maintien en position de l'élément absorbant d'énergie 1' sans avoir un risque de repli de celui-ci.

A cet effet, les éléments bloquants sont formés chacun par deux rebords 13.1, 13.2 délimitant une cuvette pour recevoir les extrémités distales 2', 2" de l'élément absorbant 1', les rebords 13.1, 13.2 étant destinés à venir en appui contre des côtés des extrémités distales 2', 2" afin de limiter le déplacement possible de la bride 12 suivant une direction perpendiculaire à la direction longitudinale de l'élément absorbant 1'.

La Figure 2 fait également apparaître que l'épaisseur K1 de la partie 22 de la bride 12 qui s'étend entre les deux extrémités 13 est inférieure à l'épaisseur K2 de chacune des extrémités 13.

La bride 12 est conçue pour ne pas flamber aux efforts exercés par l'élément absorbant d'énergie 1'. A cet effet, l'épaisseur K1 de la bride 12 est fonction des efforts de compressions exercés par l'élément absorbant d'énergie 1 sur la bride 12.

En outre, la longueur L de la bride 12 est fonction du niveau de précontrainte exigé par l'élément absorbant d'énergie 1 pour le fonctionnement souhaité.

Le maintien de la bride 12 est réalisé par les efforts F de compression exercés par l'élément absorbant d'énergie qui a tendance à vouloir retourner dans la position dans laquelle l'élément n'est pas contraint.

Les segments droits 7, 8, 9 sont sensiblement parallèles entre eux lorsque aucun effort de précontrainte n'est appliqué par la bride 12 sur l'élément absorbant (cf. Figure 1), et forment un léger angle avec une direction B perpendiculaire à la direction longitudinale de la bride 12 lorsque l'élément est précontraint par la bride (cf. Figure 2). La direction B se situe dans le plan dans lequel s'étendent les éléments filiformes 5, 6.

On note que les points d'ancrages 3 et 4 gardent les mêmes fonctions que pour un élément absorbant d'énergie 1 non précontraint.

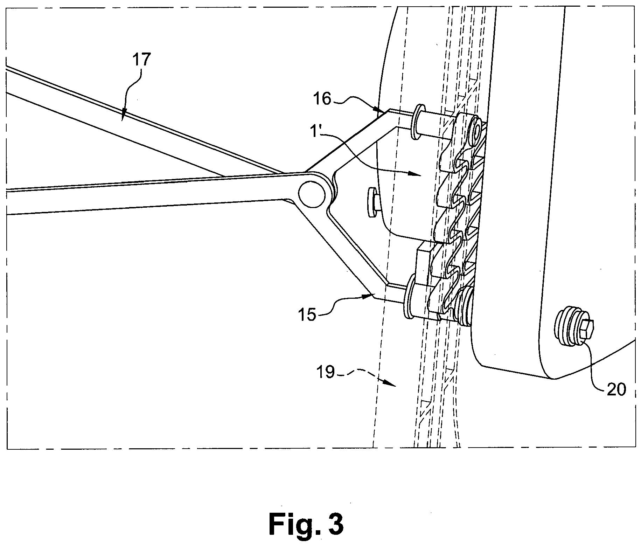

Comme montré sur la Figure 3, un siège d'hélicoptère comporte un montant 19 conçu pour intégrer deux axes 15, 16 coopérant avec les points d'ancrage 3, 4 de l'élément absorbant d'énergie 1'. Plus précisément, l'axe 16 est un axe fixe coopérant avec le point d'ancrage 3. L'axe 15 est un axe mobile coulissant dans une glissière du montant 19, cet axe 15 étant relié à un baquet référencé 20.

Le procédé consiste après avoir assemblé tous les éléments composant le siège, de précontraindre l'élément absorbant d'énergie 1' à l'aide d'un outillage spécialisé 17 dans le but d'insérer une bride 12 dans la glissière du montant 19 bloquant l'axe mobile 15 en position.

Une fois montés sur le siège, les axes 15 et 16 ont la caractéristique de pouvoir s'adapter sur l'outillage spécialisé 17 permettant d'exercer un effort de précontrainte afin de réaliser l'étape de mise en place de la bride de précontrainte 12.

L'avantage associé à la précontrainte de la bride 12 est l'amélioration des performances de l'élément absorbant d'énergie 1 selon l'état de la technique notamment dans ses applications décrites dans le document EP-2113677.

## Revendications

1. Élément absorbant (1') d'énergie comportant
- une portion absorbante (2), formée par deux éléments filiformes (5, 6) solides aptes à se déformer élastiquement lors d'une sollicitation en traction inférieure à un seuil prédéterminé et plastiquement lors d'une sollicitation en traction supérieure au seuil prédéterminé,
- un premier (3) et un deuxième point d'ancrage (4),
- une première (2') et une deuxième (2") extrémités distales de ladite partie absorbante (2) étant respectivement solidarisées aux premier et deuxième points d'ancrage (3,4),
**caractérisé en ce qu'**il comporte en outre :
- une bride (12) de précontrainte installée entre la première (2') et la deuxième (2") extrémités distales, cette bride (12) présentant une longueur (L) supérieure à l'écart (E) entre les deux extrémités distales (2',2") de l'élément absorbant non précontraint de manière à précontraindre en traction ledit élément absorbant.

2. Elément absorbant selon la revendication 1, **caractérisé en ce que** la bride (12) est installée entre ces deux éléments filiformes (5, 6).

3. Élément absorbant selon la revendication 1 ou 2, **caractérisé en ce que** la bride (12) de précontrainte est positionnée suivant un axe (X) de symétrie de l'élément absorbant.

4. Elément absorbant selon l'une des revendications 1 à 3, **caractérisé en ce que** l'épaisseur de la bride (12) est fonction des efforts de compressions exercés par la portion absorbante (2) sur la bride.

5. Élément absorbant selon l'une des revendications 1 à 4, **caractérisé en ce que** la longueur (L) de la bride est fonction du niveau de précontrainte exigé par la portion absorbante (2) pour le fonctionnement souhaité.

6. Bride destinée à être utilisée avec l'élément absorbant selon l'une des revendications 1 à 5, **caractérisé en ce qu'**elle est configurée de manière à pouvoir précontraindre en traction l'élément absorbant (1') et présente la forme sensiblement d'une tige allongée comportant des extrémités (13) présentant chacune deux rebords (13.1 , 13.2) délimitant une cuvette apte à recevoir les extrémités distales (2', 2") de l'élément absorbant (1').

## Patentansprüche

1. Energieabsorbierendes Element (1') mit:
- einem absorbierenden Abschnitt (2), der aus zwei drahtförmigen, festen Elementen (5, 6) geformt ist, die sich elastisch verformen können während einer Zugbelastung und unterhalb eines vorgegebenen Schwellenwerts, und die sich plastisch verformen können während einer Zugbelastung oberhalb des vorbestimmten Schwellenwerts,
- einem ersten (3) und einem zweiten Befestigungspunkt (4),
- einem ersten (2') und einem zweiten (2") distalen Ende des absorbierenden Abschnitts (2), die jeweils mit dem ersten und dem zweiten Befestigungspunkt (3, 4) fest verbunden sind,
**dadurch gekennzeichnet, dass** es ferner aufweist:
- einen Vorspannungsflansch (12), der zwischen dem ersten (2') und dem zweiten (2") distalen Ende installiert ist, wobei dieser Flansch (12) eine Länge (L) aufweist, die größer ist als der Abstand (E) zwischen den beiden distalen Enden (2', 2") des nicht vorgespannten absorbierenden Elements, derart, dass das absorbierende Element auf Zug vorgespannt ist.

2. Absorbierendes Element nach Anspruch 1,
**dadurch gekennzeichnet, dass** der Flansch (12) zwischen den beiden drahtförmigen Elementen (5, 6) installiert ist.

3. Absorbierendes Element nach Anspruch 1 oder 2,
**dadurch gekennzeichnet, dass** der Vorspannungsflansch (12) entlang einer Symmetrieachse (X) des absorbierenden Elements angeordnet ist.

4. Absorbierendes Element nach einem der Ansprüche 1 bis 3,
**dadurch gekennzeichnet, dass** die Dicke des Flansches (12) von den Druckkräften abhängt, die von dem absorbierenden Abschnitt (2) auf den Flansch ausgeübt werden.

5. Absorbierendes Element nach einem der Ansprüche 1 bis 4,
**dadurch gekennzeichnet, dass** die Länge (L) des Flansches von der Höhe der Vorspannung abhängt, die von dem absorbierenden Abschnitt (2) für das gewünschte Funktionieren verlangt wird.

6. Flansch, der dazu bestimmt ist, mit einem absorbierenden Element nach einem der Ansprüche 1 bis 5 verwendet zu werden,
**dadurch gekennzeichnet, dass** dieser so ausgebildet ist, dass er das absorbierende Element (1') unter Zug vorspannen kann und im Wesentlichen die Form einer länglichen Stange aufweist, mit Enden (13), die jeweils zwei Ränder (13.1, 13.2) aufweisen, die eine Mulde eingrenzen, die die distalen Enden (2', 2") des absorbierenden Elements (1') aufnehmen kann.

## Claims

1. An energy-absorbing element (1'), comprising
- an absorbing portion (2), formed by two solid filiform elements (5, 6) capable of deforming elastically under a tensile stress which is less than a predetermined threshold and plastically under a tensile stress which is greater than the predetermined threshold,
- a first (3) and a second (4) anchoring point,
- a first (2') and a second (2") distal end of said absorbing portion (2) being secured to the first and second anchoring points (3, 4) respectively,
**characterised in that** it furthermore comprises:
- a prestressing flange (12) installed between the first (2') and the second (2") distal end, this flange (12) having a length (L) greater than the distance (E) between the two distal ends (2', 2") of the non-prestressed absorbing element so as to prestress said absorbing element in tension.

2. An absorbing element according to Claim 1, **characterised in that** the flange (12) is installed between these two filiform elements (5, 6).

3. An absorbing element according to Claim 1 or 2, **characterised in that** the prestressing flange (12) is positioned along an axis of symmetry (X) of the absorbing element.

4. An absorbing element according to one of Claims 1 to 3, **characterised in that** the thickness of the flange (12) is a function of the compressive stresses exerted on the flange by the absorbing portion (2).

5. An absorbing element according to one of Claims 1 to 4, **characterised in that** the length (L) of the flange is a function of the level of prestress required by the absorbing portion (2) for the desired functioning.

6. A flange intended to be used with the absorbing element according to one of Claims 1 to 5, **characterised in that** it is configured so as to be able to prestress the absorbing element (1') in tension, and is substantially in the form of an elongated rod comprising ends (13) each having two edges (13.1, 13.2) which define a bowl capable of receiving the distal ends (2', 2") of the absorbing element (1').
